# EUROPEAN PATENT APPLICATION

(11) **EP 4 730 439 A1**
(43) Date of publication of application: **22.04.2026**
(21) Application number: 24823337.1
(22) Date of filing: 10.06.2024
(51) Int. Cl.: H01M 4/62, H01M 4/139, H01M 4/525, H01M 4/58

(54) **COMPOSITION FOR ELECTRODE FORMATION AND ADDITIVE**

(30) Priority: 15.06.2023 JP 2023098495
(71) Applicant: Nissan Chemical Corporation, Tokyo 103-6119 (JP)
(72) Inventor: HATANAKA Tatsuya, Funabashi-shi, Chiba 274-0052 (JP); IKEDA Takumi, Funabashi-shi, Chiba 274-0052 (JP); OTA Hirofumi, Funabashi-shi, Chiba 274-0052 (JP); SAKAIDA Yasushi, Funabashi-shi, Chiba 274-0052 (JP)
(74) Representative: Müller-Boré & Partner Patentanwälte PartG mbB
(86) International application number: PCT/JP2024/021021
(87) International publication number: WO 2024/257721

(57) **Abstract**

The present invention provides a composition for electrode formation that, via a simple method, suppresses thickening and gelation and improves storage stability, and that enables a high concentration of solid content. Provided is a composition for electrode formation comprising a heterocycle-containing compound, a positive electrode active material, a binder, and a solvent, wherein the heterocycle-containing compound has a five-membered ring heterocycle having not less than two N atoms and has at least one group selected from the group consisting of a hydroxy group and a thiol group.

## Description

### TECHNICAL FIELD

The present invention relates to an electrode-forming composition and an additive.

### BACKGROUND ART

Lithium-ion secondary batteries, because of their high energy density per unit weight and volume, are contributing to reductions in the size and weight of built-in electronic devices. In recent years, with the accelerating adoption of electric cars in the drive toward automotive zero emissions, there is a desire for even lower battery resistance, longer life, higher capacity, better safety and lower cost.

Lithium-ion batteries generally have a three-layer construction --positive electrode/separator/negative electrode-- that includes an electrolyte solution. The positive and negative electrodes are produced by coating a current collector with an electrode slurry prepared by mixing together, for example, an active material, a conductive material and a binder. The method most commonly used today for producing negative electrodes involves applying a negative electrode slurry onto copper foil as the current collector, and drying the applied slurry. The method most commonly used for producing positive electrodes involves preparing a positive electrode slurry using an organic solvent such as N-methyl-2-pyrrolidone as the solvent, and coating the slurry onto aluminum foil as the current collector.

Inorganic compounds such as alkali metal-containing transition metal oxides and transition metal chalcogens are known as positive electrode active materials for lithium-ion secondary batteries which are capable of achieving a battery voltage of about 4 V. Of these, highly alkaline positive electrode active materials containing much nickel or manganese are used for the purpose of obtaining high-capacity lithium-ion secondary batteries.

For example, high-nickel positive electrode active materials such as LiₓNiO₂ have a high discharge capacity and are thus attractive positive electrode materials. However, the alkaline constituents LiOH, Li₂O, LiHCO₃ and Li₂CO₃ that form in proton exchange reactions of such high-nickel positive electrode active materials with starting material residues or moisture and in reactions with moisture or carbon dioxide in the air are present on the surface.

A problem that arises with the use of such a positive electrode active material is that the electrode slurry thickens or gels, gradually losing fluidity. When the electrode slurry loses fluidity, not only does it become difficult to obtain a uniform coating thickness, in some cases coating becomes impossible to carry out, resulting in a waste of material.

The chief cause of this is thought to be that, in the positive electrode production step, alkaline constituents present on the surface of the positive electrode active material promote, in the presence of a trace amount of moisture, dehydrofluorination reactions in fluorinated binders having a vinylidene fluoride structure, such as polyvinylidene fluoride (PVdF), that are used as the binder.

In addition, alkaline constituents increase the battery resistance by corroding the aluminum foil typically used as the positive electrode current-collecting foil. Also, there is a risk of the alkaline constituents reacting with the electrolyte solution within the battery, increasing the battery resistance and worsening the battery life.

Although such thickening and gelation can be suppressed by handling the starting materials and electrode slurry in a dry environment and controlling the moisture content, a large-scale facility is required for the series of mass-production operations from electrode slurry preparation to battery production. An additional problem is the increased cost and greater environmental impact resulting from the use of a large amount of electricity.

In order to resolve this problem, Patent Document 1 discloses art which suppresses electrode slurry gelation by carrying out the preparation of an electrode slurry (positive electrode material slurry) in such a way as to not exhibit strong alkalinity even when dispersed in water. However, in the method described in Patent Document 1, the preparation of an electrode slurry in such a way as to not exhibit strong alkalinity not only requires strict pH control, it also requires treatment which, all at once time, disperses a positive electrode active material in water, removes the positive electrode active material from the dispersion by filtration and then dries it. This results in operational complexity and decreased yield. Moreover, there is also a possibility of such treatment triggering a decline in the performance of the positive electrode active material itself.

Patent Document 2 reports art which uses a compound such as ultrahigh-molecular-weight (weight-average molecular weight of 2,200,000 or more) polyethylene oxide that, through interactions with water (e.g., hydrogen bonding), binds the water, thereby suppressing reactions between alkaline constituents of the positive electrode active material and water, and in turn suppressing thickening and gelation. However, with ultrahigh-molecular-weight polymers that have a strong thickening effect, uniform dissolution treatment in a solvent takes time and is costly, in addition to which handling is a challenge in that preparing a high-concentration solution of the polymer is difficult. Also, because the above-described ultrahigh-molecular-weight polymer has a high water-binding ability, there is a concern that the polymer itself may introduce water into the composition, and so rigorous control in preliminary drying is essential to prevent this.

Patent Document 3 and Patent Document 4 teach the addition of an organic acid or inorganic acid in order to suppress gelation of an electrode slurry (positive electrode mixture slurry) at the positive electrode of a lithium-ion secondary battery. In Patent Document 3, maleic acid, citraconic acid and malonic acid are used in the positive electrode mixture. In Patent Document 4, acetic acid, phosphoric acid, sulfuric acid or the like is used in the electrode slurry (positive electrode paste). However, a large amount of addition is necessary to neutralize the alkali with acid. As a result, this may lead to a decrease in the energy density of the battery or an increase in the battery resistance. Another problem is that the acid corrodes the equipment used in electrode production.

Patent Document 5 discloses a method which can prevent gelation and also suppress gas evolution by using fluorine gas to treat the positive electrode active material and fixing the remaining LiOH as LiF. However, fluorine gas is highly toxic and difficult to handle, in addition to which the LiF that forms as a by-product increases the internal resistance of the battery, resulting in a decrease in the battery capacity. The capacity decreases also due to corrosion of the positive electrode active material by fluorine gas. Another problem is that residual fluorine reacts with trace moisture present in the active material and the electrolyte solution, forming hydrogen fluoride, which readily leads to cycle deterioration.

Patent Document 6 teaches that washing with a lithium salt-containing aqueous solution removes unreacted lithium hydroxide and impurities originating from the starting materials. However, the increased environmental impact of the wastewater generated during washing and the costs associated with wastewater treatment pose a problem.

### PRIOR ART DOCUMENTS

### PATENT DOCUMENTS

Patent Document 1: JP-A 2000-90917
Patent Document 2: JP-A 2019-121471
Patent Document 3: JP-A H09-306502
Patent Document 4: JP-A H10-79244
Patent Document 5: JP-A 2006-286240
Patent Document 6: WO 2017/034001 A1

### SUMMARY OF INVENTION

### TECHNICAL PROBLEM

In light of such circumstances, an object of this invention is to provide an electrode-forming composition with which it is possible by a simple method to suppress the thickening and gelation of an electrode slurry and thus improve shelf stability, and also to increase the concentration of solids and suppress battery deterioration. Another object of the invention is to provide an additive that is effective for suppressing the gelation of electrode-forming compositions.

### SOLUTION TO PROBLEM

The inventors have conducted intensive investigations in order to achieve the foregoing objects. As a result, they have discovered that by adding a specific heterocycle-containing compound which has a heterocycle that is a five-membered ring containing two or more nitrogen atoms and moreover has at least one group selected from the group consisting of hydroxyl and thiol groups to an electrode-forming composition containing at least a positive electrode active material, a binder and a solvent, thickening and gelation of the composition can be suppressed, enabling the shelf stability to be increased. Moreover, in an electrode produced using the electrode-forming composition of the invention, deterioration within a battery that is caused by alkaline constituents is suppressed, enabling the battery characteristics to be enhanced.

Accordingly, the invention provides the following electrode-forming composition and additive.
1. An electrode-forming composition containing a heterocycle-containing compound, a positive electrode active material, a binder and a solvent, wherein the heterocycle-containing compound has a heterocycle that is a five-membered ring having two or more nitrogen atoms and also has at least one group selected from the group consisting of hydroxyl and thiol groups.
2. The electrode-forming composition of 1 above, wherein the heterocycle-containing compound is a compound of any of formulas (1) to (5) below 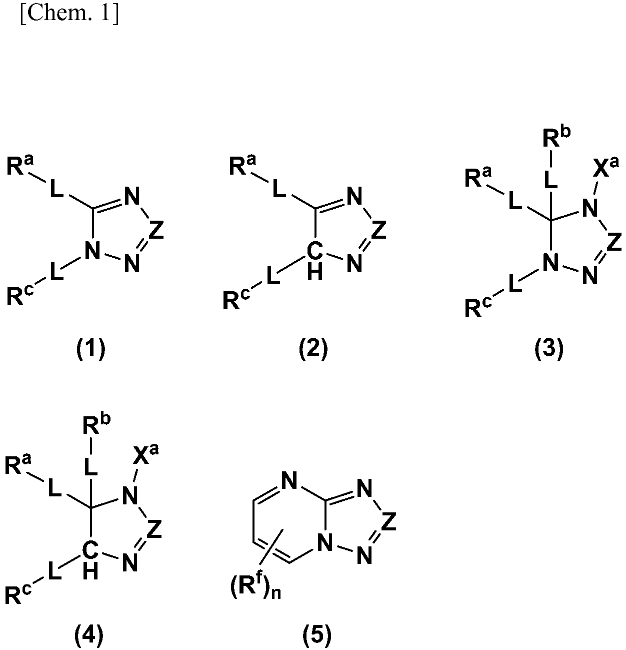 (wherein Z is nitrogen or C-L-R^{d};
   R^{a} to R^{d} are each independently a hydrogen atom, a halogen atom, a carboxyl group, a hydroxyl group, a thiol group, an amino group, an alkyl group of 1 to 6 carbon atoms which may have a substituent, an alkenyl group of 2 to 6 carbon atoms which may have a substituent, or an aryl group of 6 to 12 carbon atoms which may have a substituent;
   R^{a} and R^{c} may mutually bond to form a ring of 4 to 12 carbon atoms which may have a substituent;
   each L is independently a single bond, a carbonyl group, an ether bond, an ester bond or an amide bond;
   each X^{a} is independently a hydrogen atom, a lithium atom, a sodium atom, an alkyl group of 1 to 6 carbon atoms which may have a substituent, an aryl group of 6 to 12 carbon atoms which may have a substituent or -CH₂NR^{e}₂;
   R^{e} is an alkyl group of 1 to 10 carbon atoms, an alkanol group of 1 to 10 carbon atoms, an alkenyl group of 2 to 10 carbon atoms or an aryl group of 6 to 12 carbon atoms;
   each R^{f} is independently a halogen atom, a carboxyl group, a hydroxyl group, an aldehyde group, an ester group, a ketone group, an amino group, a phenyl group, an alkoxysilyl group, an epoxy group, an acid chloride group, a thiol group, an alkyl group of 1 to 6 carbon atoms, an alkenyl group of 2 to 6 carbon atoms, or an aryl group of 6 to 12 carbon atoms; and
   n is an integer from 0 to 3).
3. The electrode-forming composition of 2 above, wherein the substituent on R^{a} to R^{d} and X^{a} is at least one selected from the group consisting of carboxyl, hydroxyl, aldehyde, ester, ketone, amino and phenyl groups, halogen atoms, and alkoxysilyl, epoxy, acid chloride and thiol groups.
4. The electrode-forming composition of 2 or 3 above, wherein at least one of R^{a} to R^{d} is a hydroxyl group or a thiol group.
5. The electrode-forming composition of any of 2 to 4 above, wherein each X^{a} is independently a hydrogen atom, a lithium atom or a sodium atom.
6. The electrode-forming composition of any of 1 to 5 above, further containing a conductive additive.
7. The electrode-forming composition of any of 1 to 6 above, wherein the positive electrode active material includes at least 30 wt% of S, Fe or Ni.
8. The electrode-forming composition of any of 1 to 7 above, further containing a dispersant, which dispersant is a polymer having a pyrrolidone structure or containing nitrile groups.
9. The electrode-forming composition of 8 above, wherein the dispersant is of at least one type selected from the group consisting of polyvinylpyrrolidone and polyacrylonitrile.
10. The electrode-forming composition of any of 1 to 9 above, wherein the heterocycle-containing compound is included in an amount of from 0.001 to 0.5 wt% of the solids.
11. An additive for an electrode-forming composition that includes a positive electrode active material, a binder and a solvent, wherein the additive includes a heterocycle-containing compound of any of formulas (1) to (5) below 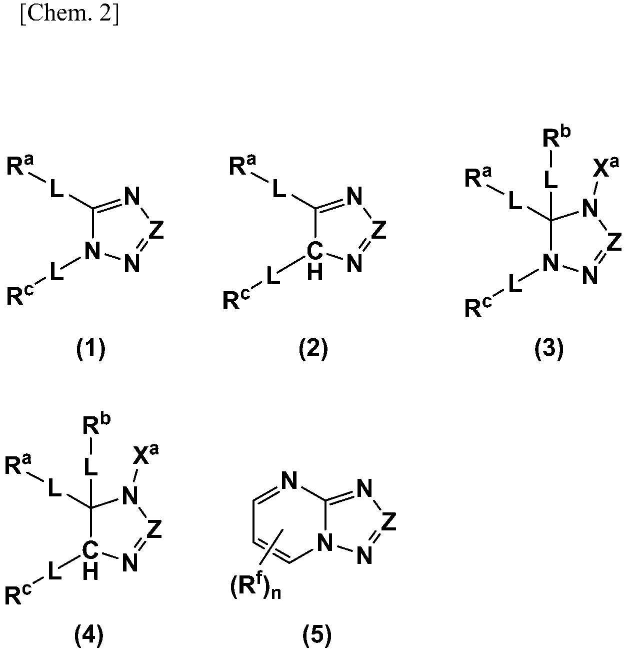 (wherein Z is nitrogen or C-L-R^{d},
   R^{a} to R^{d} are each independently a hydrogen atom, a halogen atom, a carboxyl group, a hydroxyl group, a thiol group, an amino group, an alkyl group of 1 to 6 carbon atoms which may have a substituent, an alkenyl group of 2 to 6 carbon atoms which may have a substituent, or an aryl group of 6 to 12 carbon atoms which may have a substituent;
   R^{a} and R^{c} may mutually bond to form a ring of 4 to 12 carbon atoms which may have a substituent;
   each L is independently a single bond, a carbonyl group, an ether bond, an ester bond or an amide bond;
   each X^{a} is independently a hydrogen atom, a lithium atom, a sodium atom, an alkyl group of 1 to 6 carbon atoms which may have a substituent, an aryl group of 6 to 12 carbon atoms which may have a substituent or -CH₂NR^{e}₂;
   R^{e} is an alkyl group of 1 to 10 carbon atoms, an alkanol group of 1 to 10 carbon atoms, an alkenyl group of 2 to 10 carbon atoms or an aryl group of 6 to 12 carbon atoms;
   each R^{f} is independently a halogen atom, a carboxyl group, a hydroxyl group, an aldehyde group, an ester group, a ketone group, an amino group, a phenyl group, an alkoxysilyl group, an epoxy group, an acid chloride group, a thiol group, an alkyl group of 1 to 6 carbon atoms, an alkenyl group of 2 to 6 carbon atoms, or an aryl group of 6 to 12 carbon atoms; and
   n is an integer from 0 to 3).
12. The additive of 11 above which is a gelation inhibitor.
13. An additive solution for an electrode-forming composition that includes a positive electrode active material, a binder and a solvent, which additive solution includes an additive comprised of a heterocycle-containing compound of any of formulas (1) to (5) below and a solvent 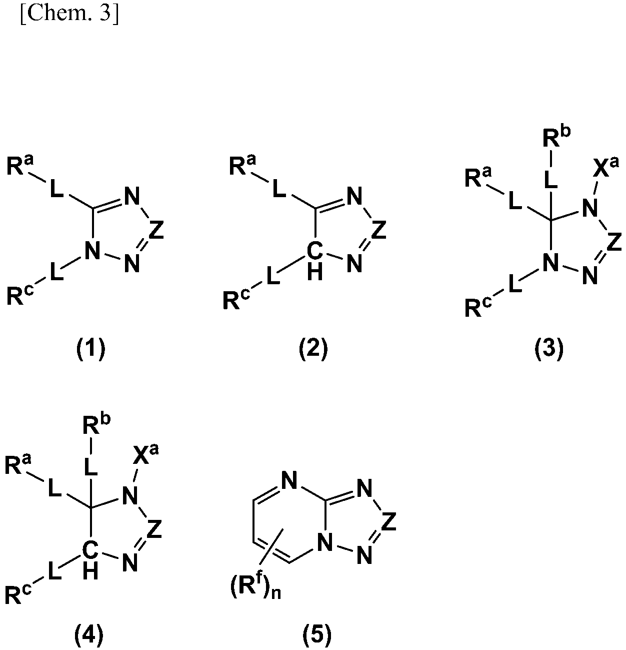 (wherein Z is nitrogen or C-L-R^{d},
   R^{a} to R^{d} are each independently a hydrogen atom, a halogen atom, a carboxyl group, a hydroxyl group, a thiol group, an amino group, an alkyl group of 1 to 6 carbon atoms which may have a substituent, an alkenyl group of 2 to 6 carbon atoms which may have a substituent, or an aryl group of 6 to 12 carbon atoms which may have a substituent;
   R^{a} and R^{c} may mutually bond to form a ring of 4 to 12 carbon atoms which may have a substituent;
   each L is independently a single bond, a carbonyl group, an ether bond, an ester bond or an amide bond;
   each X^{a} is independently a hydrogen atom, a lithium atom, a sodium atom, an alkyl group of 1 to 6 carbon atoms which may have a substituent, an aryl group of 6 to 12 carbon atoms which may have a substituent or -CH₂NR^{e}₂;
   R^{e} is an alkyl group of 1 to 10 carbon atoms, an alkanol group of 1 to 10 carbon atoms, an alkenyl group of 2 to 10 carbon atoms or an aryl group of 6 to 12 carbon atoms;
   each R^{f} is independently a halogen atom, a carboxyl group, a hydroxyl group, an aldehyde group, an ester group, a ketone group, an amino group, a phenyl group, an alkoxysilyl group, an epoxy group, an acid chloride group, a thiol group, an alkyl group of 1 to 6 carbon atoms, an alkenyl group of 2 to 6 carbon atoms, or an aryl group of 6 to 12 carbon atoms; and
   n is an integer from 0 to 3).

### ADVANTAGEOUS EFFECTS OF INVENTION

The electrode-forming composition of the invention is a composition which resists thickening and gelation and thus has a high shelf stability, and which can be suitably used to form a positive electrode for an energy storage device. When energy-storage batteries equipped with an electrode produced using this composition are manufactured, anticipated advantages include improved quality and yield due to the enhanced shelf stability of the composition, lower costs and reduced environmental impact due to the higher concentration of solids, and less deterioration within the battery caused by alkaline constituents. Such advantages can help lower the manufacturing costs of energy storage devices and improve the battery characteristics.

Although the mechanism for such thickening and gelation and the mechanism underlying the appearance of the thickening and gelation-suppressing effects are unclear, in the present invention these are thought to be due to the formation of a protective film on the surface of alkaline constituents owing to the addition to the electrode-forming composition of a specific heterocycle-containing compound. Presumably, this protective film suppresses reactions between alkaline constituents and the binder, particularly a fluorinated binder, as a result of which thickening and gelation of the composition can be suppressed, enhancing the shelf stability. Because thickening and gelation of the electrode-forming composition are suppressed, solids such as the positive electrode active material and the conductive additive have a good dispersibility, making it possible to form a uniform positive electrode layer. In addition, it is also possible to increase the concentration of solids in the electrode slurry, enabling the cost and environmental impact of manufacturing energy storage devices to be reduced. Furthermore, corrosion by alkaline components of the aluminum foil commonly used as the current-collecting foil and deterioration of the battery characteristics due to reaction with the electrolyte solution can be suppressed. However, these are merely assumptions and so the present invention should not be construed as being limited to the foregoing mechanisms.

### DESCRIPTION OF EMBODIMENTS

The electrode-forming composition of the invention is a composition which includes a heterocycle-containing compound, a positive electrode active material, a binder and a solvent. The heterocycle-containing compound has a heterocycle that is a five-membered ring containing two or more nitrogen atoms and moreover has at least one group selected from the group consisting of hydroxyl and thiol groups.

The heterocyclic compound is preferably a heterocycle-containing compound of any of formulas (1) to (5) below, more preferably a heterocycle-containing compound of any of formulas (1), (2), (4) and (5), and even more preferably a heterocycle-containing compound of either of formulas (1) and (4). 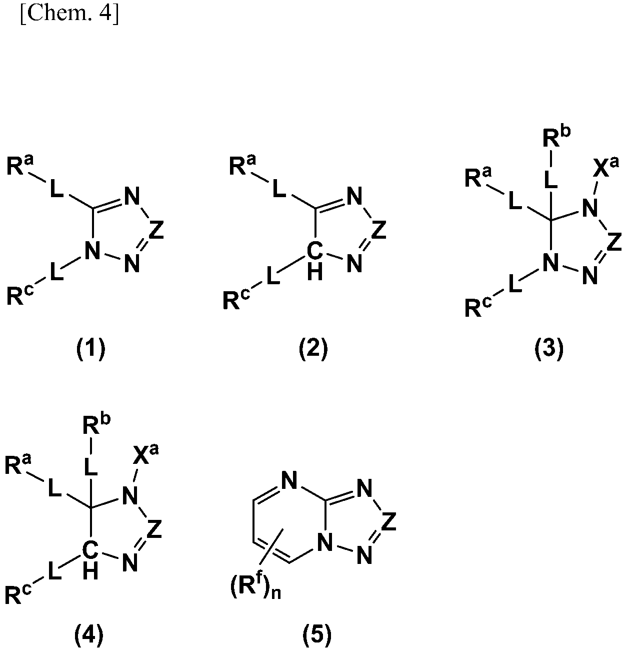 In these formulas, Z is nitrogen or C-L-R^{d};
R^{a} to R^{d} are each independently a hydrogen atom, a halogen atom, a carboxyl group, a hydroxyl group, a thiol group, an amino group, an alkyl group of 1 to 6 carbon atoms which may have a substituent, an alkenyl group of 2 to 6 carbon atoms which may have a substituent, or an aryl group of 6 to 12 carbon atoms which may have a substituent;
R^{a} and R^{c} may mutually bond to form a ring of 4 to 12 carbon atoms which may have a substituent;
each L is independently a single bond, a carbonyl group, an ether bond, an ester bond or an amide bond;
each X^{a} is independently a hydrogen atom, a lithium atom, a sodium atom, an alkyl group of 1 to 6 carbon atoms which may have a substituent, an aryl group of 6 to 12 carbon atoms which may have a substituent or -CH₂NR^{e}₂;
R^{e} is an alkyl group of 1 to 10 carbon atoms, an alkanol group of 1 to 10 carbon atoms, an alkenyl group of 2 to 10 carbon atoms or an aryl group of 6 to 12 carbon atoms;
each R^{f} is independently a halogen atom, a carboxyl group, a hydroxyl group, an aldehyde group, an ester group, a ketone group, an amino group, a phenyl group, an alkoxysilyl group, an epoxy group, an acid chloride group (or an acyl chloride group), a thiol group, an alkyl group of 1 to 6 carbon atoms, an alkenyl group of 2 to 6 carbon atoms, or an aryl group of 6 to 12 carbon atoms; and
n is an integer from 0 to 3).

In cases where L is a single bond and at least one of R^{a} to R^{d} is a hydrogen atom or a halogen atom, or in cases where at X^{a} is a hydrogen atom, a lithium atom or a sodium atom, above formulas (1) to (4) may be structural isomers. Specifically, the heterocycle-containing compounds of formulas (1-A) to (1-C) below are isomers of heterocycle-containing compounds of formula (1), the heterocycle-containing compounds of formulas (2-A) to (2-D) below are isomers of heterocycle-containing compounds of formula (2), the heterocycle-containing compounds of formulas (3-A) to (3-C) below are isomers of heterocycle-containing compounds of formula (3), and the heterocycle-containing compounds of formulas (4-A) to (4-C) below are isomers of heterocycle-containing compounds of formula (4). Also, when at least one of R^{a} to R^{d} is a hydroxyl group or a thiol group, structural isomers can be created by having these be ketone groups or thioketone groups.

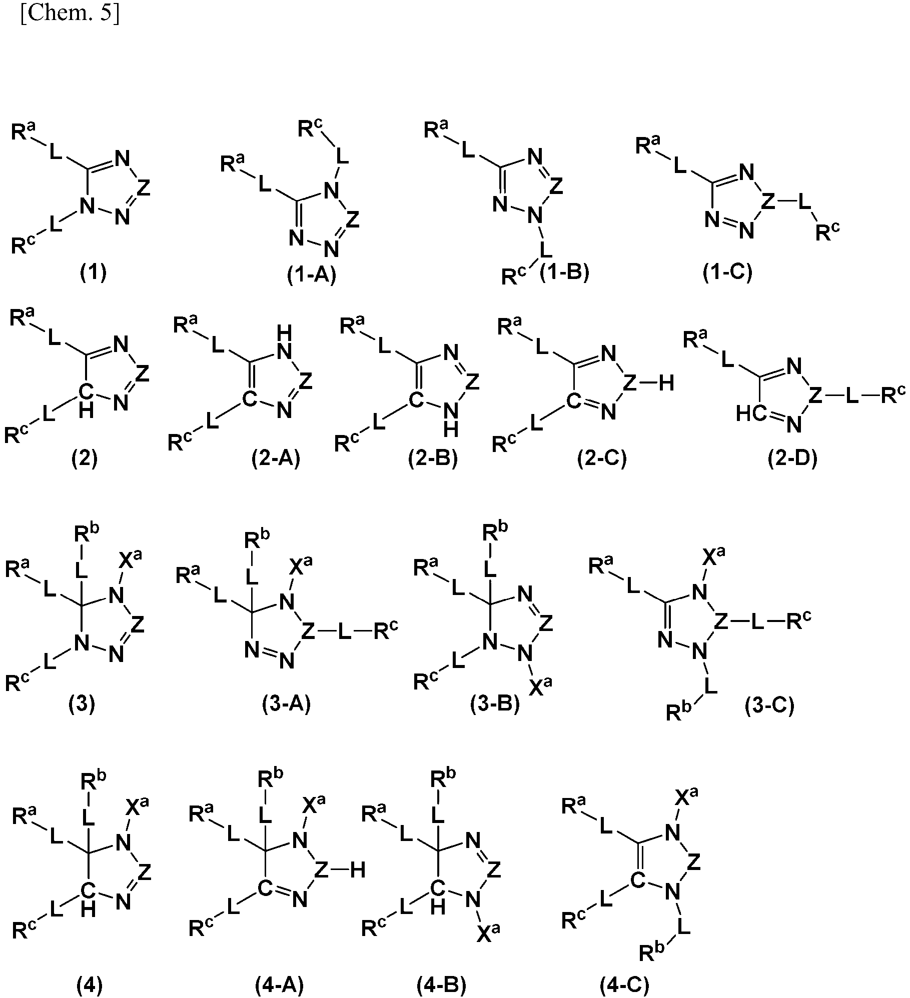

Z is preferably nitrogen or C-R^{d}.

The alkyl groups of 1 to 6 carbon atoms represented by R^{a} to R^{d} may be linear, branched or cyclic. Specific examples include linear or branched alkyl groups of 1 to 6 carbon atoms, such as methyl, ethyl, n-propyl, isopropyl, n-butyl, isobutyl, s-butyl, t-butyl, n-pentyl and n-hexyl groups; and cyclic alkyl groups of 3 to 6 carbon atoms, such as cyclopropyl, cyclobutyl, cyclopentyl and cyclohexyl groups.

Examples of the alkenyl groups of 2 to 6 carbon atoms represented by R^{a} to R^{d} include ethenyl, n-1-propenyl, n-2-propenyl, 1-methylethenyl, n-1-butenyl, n-2-butenyl, n-3-butenyl, 2-methyl-1-propenyl, 2-methyl-2-propenyl, 1-ethylethenyl, 1-methyl-1-propenyl, 1-methyl-2-propenyl and n-1-pentenyl groups.

Examples of the aryl groups of 6 to 12 carbon atoms represented by R^{a} to R^{d} include phenyl, tolyl, 1-naphthyl and 2-naphthyl groups.

Examples of rings of 4 to 12 carbons formed by the mutual bonding of R^{a} and R^{c} include cyclopentane, cyclohexane, benzene, naphthalene, triazole, pyridine and pyrazine rings.

R^{a} to R^{d} may have substituents. Examples of the substituents include carboxyl groups, hydroxyl groups, aldehyde groups, ester groups, ketone groups, amino groups, phenyl groups, halogen atoms, alkoxysilyl groups, epoxy groups, acid chloride groups and thiol groups. Examples of the alkoxysilyl groups include trimethoxysilyl, dimethoxymethylsilyl, methoxydimethylsilyl, triethoxysilyl, diethoxymethylsilyl and ethoxydimethylsilyl groups. In this invention, carboxyl groups, hydroxyl groups and thiol groups are preferred. In cases where R^{a} to R^{d} have substituents, the number of such substituents is preferably from 1 to 6, and more preferably from 1 to 3.

It is preferable for R^{a} to R^{d} to be hydrogen atoms, carboxyl groups, hydroxyl groups, thiol groups, alkyl groups of 1 to 6 carbon atoms which may have a substituent or aryl groups of 6 to 12 carbon atoms which may have a substituent, and for R^{a} and R^{c} to mutually bond, forming a ring of 4 to 12 carbon atoms which may have a substituent.

It is more preferable for R^{a} to R^{d} to be hydrogen atoms, carboxyl groups, hydroxyl groups, thiol groups, alkyl groups of 1 to 6 carbon atoms or aryl groups of 6 to 12 carbon atoms, and for R^{a} and R^{c} to mutually bond, forming an aromatic ring of 4 to 12 carbon atoms which may have a substituent.

It is even more preferable for R^{a} to R^{d} to be hydrogen atoms, carboxyl groups, hydroxyl groups, thiol groups, alkyl groups of 1 to 3 carbon atoms or aryl groups of 6 to 10 carbon atoms, and for R^{a} and R^{c} to mutually bond, forming an aromatic ring of 6 to 10 carbon atoms which may have a substituent.

It is even more preferable for R^{a} to R^{d} to be hydrogen atoms, carboxyl groups, hydroxyl groups, thiol groups, methyl groups or phenyl groups, and for R^{a} and R^{b} to mutually bond, forming a benzene ring which may have a substituent.

In the above heterocycle-containing compound, it is preferable for at least one of R^{a} to R^{d} to be a hydroxyl group or a thiol group.

L is preferably a single bond, an ester bond or an amide bond, and is more preferably a single bond.

The alkyl group of 1 to 6 carbon atoms represented by X^{a} may be linear, branched or cyclic. Specific examples include linear or branched alkyl groups of 1 to 6 carbon atoms, such as methyl, ethyl, n-propyl, isopropyl, n-butyl, isobutyl, s-butyl, t-butyl, n-pentyl and n-hexyl groups; and cyclic alkyl groups of 3 to 6 carbon atoms, such as cyclopropyl, cyclobutyl, cyclopentyl and cyclohexyl groups.

Examples of the aryl group of 6 to 12 carbon atoms represented by X^{a} include phenyl, tolyl, 1-naphthyl and 2-naphthyl groups.

X^{a} may have substituents. Examples of substituents include carboxyl groups, hydroxyl groups, aldehyde groups, ester groups, ketone groups, amino groups, phenyl groups, halogen atoms, alkoxysilyl groups, epoxy groups, acid chloride groups and thiol groups. Examples of the alkoxysilyl groups include trimethoxysilyl, dimethoxymethylsilyl, methoxydimethylsilyl, triethoxysilyl, diethoxymethylsilyl and ethoxydimethylsilyl groups. In this invention, carboxyl groups, hydroxyl groups, thiol groups and alkoxysilyl groups are preferred; carboxyl groups and trimethoxysilyl groups are more preferred. In cases where X^{a} has substituents, the number thereof is preferably from 1 to 6, and more preferably from 1 to 3.

The alkyl groups of 1 to 10 carbon atoms represented by R^{e} may be linear, branched or cyclic. Specific examples include linear or branched alkyl groups of 1 to 10 carbon atoms, such as methyl, ethyl, n-propyl, isopropyl, cyclopropyl, n-butyl, isobutyl, s-butyl, t-butyl, n-pentyl, neopentyl, n-hexyl, n-octyl, n-nonyl and n-decyl groups; and cyclic alkyl groups of 3 to 10 carbon atoms, such as cyclopropyl, cyclobutyl, cyclopentyl, cyclohexyl and 1-adamantyl groups.

Examples of alkanol groups of 1 to 10 carbon atoms represented by R^{e} include hydroxymethyl, hydroxyethyl, hydroxypropyl, hydroxybutyl, hydroxypentyl, hydroxyhexyl, hydroxyoctyl, hydroxynonyl and hydroxydecyl groups.

Examples of alkenyl groups of 2 to 10 carbon atoms represented by R^{e} include ethenyl, n-1-propenyl, n-2-propenyl, 1-methylethenyl, n-1-butenyl, n-2-butenyl, n-3-butenyl, 2-methyl-1-propenyl, 2-methyl-2-propenyl, 1-ethylethenyl, 1-methyl-1-propenyl, 1-methyl-2-propenyl, n-1-pentenyl and n-1-decenyl groups.

Examples of aryl groups of 6 to 12 carbon atoms represented by R^{e} include phenyl, tolyl, 1-naphthyl and 2-naphthyl groups.

X^{a} is preferably a hydrogen atom, a lithium atom, a sodium atom, an alkyl group of 1 to 6 carbon atoms which may have a substituent, an aryl group of 6 to 12 carbon atoms which may have a substituent or -CH₂NR^{e}₂.

X^{a} is more preferably a hydrogen atom, a lithium atom, a sodium atom, an alkyl group of 1 to 4 carbon atoms, an aryl group of 6 to 10 carbon atoms or -CH₂NR^{e}₂.

X^{a} is still more preferably a hydrogen atom, a lithium atom, a sodium atom, an alkyl group of 1 to 3 carbon atoms, an aryl group of 6 to 8 carbon atoms or -CH₂NR^{e}₂.

X^{a} is still yet more preferably a hydrogen atom, a lithium atom, a sodium atom, a methyl group, a phenyl group or -CH₂NR^{e}₂.

X^{a} is even more preferably a hydrogen atom, a lithium atom or a sodium atom.

X^{a} is most preferably a hydrogen atom.

Alkyl groups of 1 to 3 carbon atoms and aryl groups of 6 to 10 carbon atoms are preferred as R^{e}. Methyl and phenyl groups are more preferred.

The alkyl group of 1 to 6 carbon atoms represented by R^{f} may be linear, branched or cyclic. Specific examples include linear or branched alkyl groups of 1 to 6 carbon atoms, such as methyl, ethyl, n-propyl, isopropyl, n-butyl, isobutyl, s-butyl, t-butyl, n-pentyl and n-hexyl groups; and cyclic alkyl groups of 3 to 6 carbon atoms, such as cyclopropyl, cyclobutyl, cyclopentyl and cyclohexyl groups.

Examples of the alkenyl group of 2 to 6 carbon atoms represented by R^{f} include ethenyl, n-1-propenyl, n-2-propenyl, 1-methylethenyl, n-1-butenyl, n-2-butenyl, n-3-butenyl, 2-methyl-1-propenyl, 2-methyl-2-propenyl, 1-ethylethenyl, 1-methyl-1-propenyl, 1-methyl-2-propenyl and n-1-pentenyl groups.

Examples of the aryl groups of 6 to 12 carbon atoms represented by R^{f} include phenyl, tolyl, 1-naphthyl and 2-naphthyl groups.

R^{f} is preferably a halogen atom, a carboxyl group, a hydroxyl group, an ester group, an amino group, a phenyl group, an alkoxysilyl group, an epoxy group, an acid chloride group, a thiol group, an alkyl group of 1 to 6 carbon atoms, an alkenyl group of 2 to 6 carbon atoms or an aryl group of 6 to 12 carbon atoms.

R^{f} is more preferably a halogen atom, a carboxyl group, a hydroxyl group, an ester group, a phenyl groups, an alkoxysilyl group, a thiol group, an alkyl group of 1 to 6 carbon atoms, an alkenyl group of 2 to 6 carbon atoms or an aryl group of 6 to 12 carbon atoms.

R^{f} is even more preferably a hydroxyl group, a thiol group or a methyl group.

The subscript n is preferably from 0 to 2, and more preferably from 1 to 2.

The heterocycle-containing compounds of above formulas (1) to (5) are preferably heterocycle-containing compounds of formulas (1a) to (5a) below. 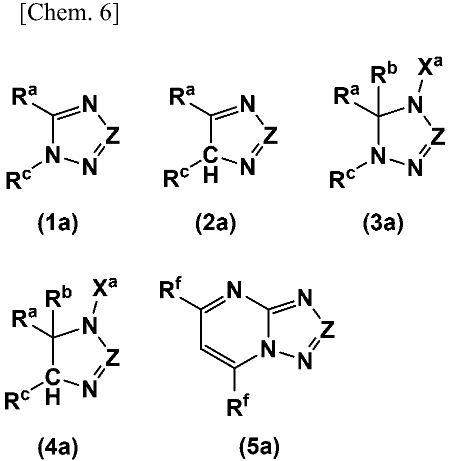 In these formulas, R^{a} to R^{c}, R^{f}, Z and X^{a} are the same as above.

The above heterocycle-containing compounds are even more preferably heterocycle-containing compounds of any of the following formulas (1b) and (3b) to (5b). 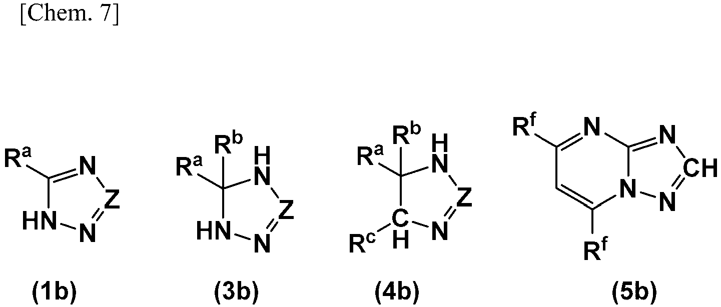 In these formulas, R^{a} to R^{c}, R^{f} and Z are the same as above.

Specific examples of heterocycle-containing compounds of above formula (1) include the heterocycle-containing compounds of formulas (1-1) to (1-7) below.

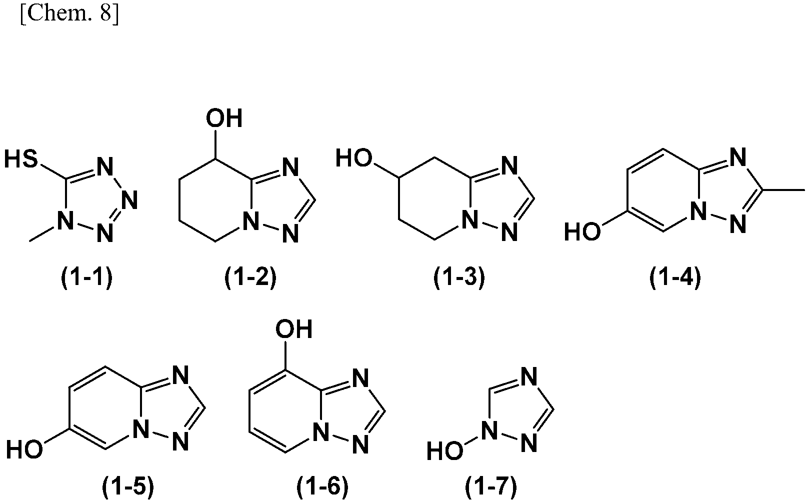

Specific examples of heterocycle-containing compounds of above formula (2) include the heterocycle-containing compounds of formulas (2-1) and (2-2) below.

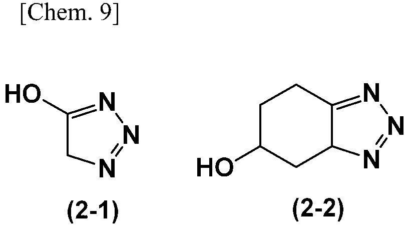

A specific example of the heterocycle-containing compound of above formula (3) is the heterocycle-containing compound of formula (3-1) below.

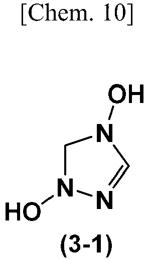

Specific examples of heterocycle-containing compounds of above formula (4) include the heterocycle-containing compounds of formulas (4-1) to (4-4) below.

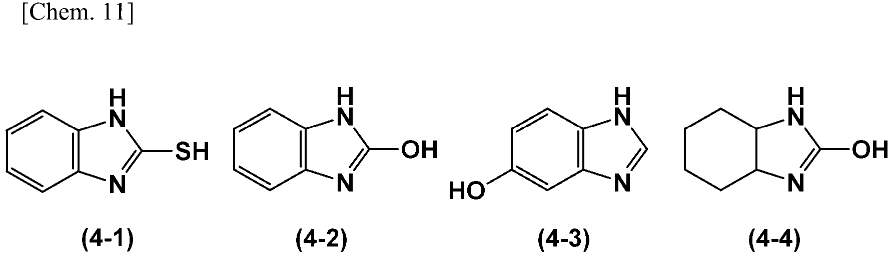

Specific examples of heterocycle-containing compounds of above formula (5) include the heterocycle-containing compound of formula (5-1) below.

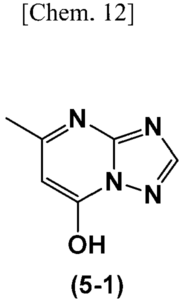

The heterocycle-containing compound is included in an amount that is preferably from 0.001 to 4 wt%, more preferably from 0.001 to 2 wt%, even more preferably from 0.001 to 0.5 wt%, still more preferably from 0.001 to 0.3 wt%, and yet more preferably from 0.001 to 0.2 wt%, of the solids. The lower limit of the heterocycle-containing compound content is even more preferably 0.01 wt% of the solids. By setting the heterocycle-containing compound content within this range, adhesion between the current collector and the electrode layer can be enhanced, enabling the characteristics of the resulting battery to be maintained. In this invention, the term 'solids' refers to ingredients other than solvents which make up the composition (the same applies below).

To further enhance the battery capacity, lower the amount of rare metals used and keep costs low, the positive electrode active material is preferably one containing at least 30 wt% of S, Fe or Ni. In this invention, to further reduce the amount of rare metals used and obtain a longer battery life, a positive electrode active material containing at least 35 wt% of Fe or Ni is more preferred, and one containing at least 45 wt% is even more preferred. The upper limit, although not strictly defined, is generally not more than 65 wt%. A material which satisfies the above conditions may be suitably selected from among the various types of active materials conventionally used in electrodes for secondary batteries and other energy storage devices, and used here as the positive electrode active material. For example, in the case of lithium secondary batteries and lithium-ion secondary batteries, chalcogen compounds capable of adsorbing and releasing lithium ions, lithium ion-containing chalcogen compounds, polyanionic compounds, elemental sulfur and sulfur compounds may be used.

Examples of lithium ion-containing chalcogen compounds include LiNiO₂, LiₓNi_{y}M_{1-y}O₂ (wherein M is one or more metal element selected from the group consisting of Co, Mn, Ti, Cr, V, Al, Sn, Pb and Zn; 0.05 ≤ x ≤ 1.10 and 0.3 ≤ y ≤ 1.0) and LiₐNi_{(1-x-y)}CoₓM¹_{y}M²_{z}X_{w}O₂ (wherein M¹ is one or more element selected from the group consisting of Mn and Al; M² is one or more element selected from the group consisting of Zr, Ti, Mg, B, Zr, W and V; 1.00 ≤ a ≤ 1.50, 0.00 ≤ x ≤ 0.50, 0 ≤ y ≤ 0.50, 0.000 ≤ z ≤ 0.020 and 0.000 ≤ w ≤ 0.020).

Examples of polyanionic compounds include LiFePO₄, LiₐMn_{b}Fe_{c}D_{d}PO₄ (1.00 ≤ a ≤ 1.15, 0.01 ≤ b ≤ 0.99, 0.01 ≤ c ≤ 0.99, 0.00 ≤ d ≤ 0.10; D is selected from Co, Mn, Ti, Cr, V, Al, Sn, Pb and Zn; and at least a portion has an olivine structure).

Illustrative examples of sulfur compounds include sulfur, Li₂S, FeS₂, TiS₂, MoS₂ and rubeanic acid.

One of these positive electrode active materials may be used alone or two or more may be used in combination.

In this invention, of the above positive electrode active materials, LiₐNi_{(1-x-y)}CoₓM¹_{y}M²_{z}X_{w}O₂ (wherein M¹ is one or more element selected from the group consisting of Mn and Al; M² is one or more element selected from the group consisting of Zr, Ti, Mg, W and V; 1.00 ≤ a ≤ 1.50, 0.00 ≤ x ≤ 0.50, 0 ≤ y ≤ 0.50, 0.000 ≤ z ≤ 0.020 and 0.000 ≤ w ≤ 0.020) is preferred. Of these positive electrode active materials, one may be used alone or two or more may be used in combination.

The content of the positive electrode active material is preferably from 88.0 to 99.949 wt%, more preferably from 88.0 to 99.899 wt%, and even more preferably from 95.0 to 99.0 wt%, of the solids.

The binder may be suitably selected from among known materials and used, but is not particularly limited. Specific examples include fluorinated binders such as polyvinylidene fluoride (PVdF), polytetrafluoroethylene, and copolymers containing at least one monomer selected from the group consisting of vinylidene fluoride, tetrafluoroethylene and hexafluoropropylene; and nonaqueous binders such as polyimides, ethylene-propylene-diene terpolymers, styrene-butadiene rubber, polyethylene and polypropylene. In the invention, from the standpoint of enhancing the shelf stability of the composition, it is preferable to use a fluorinated binder. The fluorinated binder is preferably modified with polar functional groups such as carboxyl groups and hydroxyl groups. The polar functional groups can be confirmed by the presence or absence of distinct peaks detected in the range of 10 to 15 ppm in measurement with a nuclear magnetic resonance (NMR) spectrometer. The binder may be of one type used alone or two or more may be used in combination.

The binder has a weight-average molecular weight (Mw) which, from the standpoint of enhancing adhesion between the current collector and the electrode layer, is from about 600,000 to about 3,000,000, preferably from 700,000 to 2,000,000, and more preferably from 700,000 to 1,500,000.

The weight-average molecular weight is a polystyrene-equivalent value obtained by gel permeation chromatography (GPC).

The binder content, from the standpoint of holding down costs and obtaining a high energy density, is preferably from 0.05 to 8 wt%, more preferably from 0.05 to 5 wt%, even more preferably from 0.05 to 4 wt%, still more preferably from 0.1 to 3 wt%, yet more preferably from 0.2 to 2 wt%, and most preferably from 0.3 to 1.5 wt%, of the solids.

The electrode-forming composition of the invention may additionally include a conductive additive in order to further improve the electrical conductivity. Examples of the conductive additive include carbonaceous materials such as graphite, carbon black, acetylene black (AB), vapor phase-grown carbon fibers, carbon nanotubes (CNT), carbon nanohorns and graphene; and conductive polymers such as polyaniline, polypyrrole, polythiophene, polyacetylene and polyacene. The conductive additive may be of one type used alone or two or more may be used in combination.

When the foregoing conductive additive is included, the content thereof, although not particularly limited, is preferably from 0.05 to 5 wt%, more preferably from 0.05 to 4 wt%, even more preferably from 0.1 to 3 wt%, and still more preferably from 0.2 to 2 wt%, of the solids. By setting the conductive additive content within the above range, a good electrical conductivity can be obtained.

The electrode-forming composition of the invention may additionally include a dispersant in order to enhance the dispersibility of the active material and the conductive additive. The dispersant may be suitably selected from substances which have hitherto been used as dispersants for conductive carbonaceous materials such as CNT. However, from the standpoint of the stability within the battery, including a nonionic polymer is preferred. Examples of the nonionic polymer include polyvinyl pyrrolidone (PVP) and polymers having at least one type of group selected from among nitrile, hydroxyl, carbonyl, amino, sulfonyl and ether groups. Specific examples of such polymers include polyvinyl alcohol, polyacrylonitrile, polylactic acid, polyester, polyimide, polyphenyl ether, polyphenylsulfone, polyethyleneimine and polyaniline. In this invention, a polymer having pyrrolidone structures or nitrile groups is preferred; polyvinyl pyrrolidone and polyacrylonitrile are more preferred. The above dispersant may be of one type used alone or two or more may be used in combination.

When a dispersant is included, the content thereof, although not particularly limited, is preferably from 0.001 to 0.5 wt%, more preferably from 0.001 to 0.3 wt%, and even more preferably from 0.001 to 0.2 wt%, of the solids. The lower limit in the dispersant content is even more preferably 0.01 wt% of the solids.

Taking into account adhesion between the electrode layer that is obtained and the current collector, the overall amount of the heterocycle-containing compound and the dispersant is preferably from 0.001 to 1 wt%, and more preferably from 0.01 to 1 wt%, of the solids.

The electrode-forming composition of the invention includes a solvent. No particular limitation is imposed on the solvent, so long as it is one that has been used to date in the preparation of electrode-forming compositions. Examples include water and the following organic solvents: ethers such as tetrahydrofuran (THF), diethyl ether and 1,2-dimethoxyethane (DME); halogenated hydrocarbons such as methylene chloride, chloroform and 1,2-dichloroethane; amides such as N,N-dimethylformamide (DMF), N,N-dimethylacetamide (DMAc) and N-methyl-2-pyrrolidone (NMP); ketones such as acetone, methyl ethyl ketone, methyl isobutyl ketone and cyclohexanone; alcohols such as methanol, ethanol, n-propanol, isopropanol, n-butanol and t-butanol; aliphatic hydrocarbons such as n-heptane, n-hexane and cyclohexane; aromatic hydrocarbons such as benzene, toluene, xylene and ethylbenzene; glycol ethers such as ethylene glycol monoethyl ether, ethylene glycol monobutyl ether and propylene glycol monomethyl ether; glycols such as ethylene glycol and propylene glycol; carbonates such as ethylene carbonate, propylene carbonate, dimethyl carbonate, diethyl carbonate and methyl ethyl carbonate; and also γ-butyrolactone, dimethylsulfoxide (DMSO), dioxolane and sulfolane. One of these solvents may be used alone or two or more may be used in combination.

The above-described binder may be used after being dissolved or dispersed in these solvents.

Examples of preferred solvents in this case include water, NMP, DMSO, ethylene carbonate, propylene carbonate, dimethyl carbonate, diethyl carbonate, methyl ethyl carbonate, γ-butyrolactone, THF, dioxolane, sulfolane, DMF and DMAc. The solvent may be suitably selected according to the type of binder. In the case of a water-insoluble binder such as PVdF, NMP is suitable; in the case of a water-soluble binder, water is suitable.

The solids concentration of the inventive electrode-forming composition is suitably set while taking into account, for example, the coating properties of the composition and the thickness of the electrode to be formed, and is generally from about 60 wt% to about 92 wt%, preferably from about 65 wt% to about 90 wt%, and more preferably from about 70 wt% to about 85 wt%.

The viscosity of the electrode-forming composition of the invention, which is suitably set while taking into account, for example, the coating method and the thickness of the electrode to be formed, is generally from about 100 mPa·s to about 2,000,000 mPa·s, preferably from about 300 mPa·s to about 1,000,000 mPa·s, and more preferably from about 400 mPa·s to about 800,000 mPa·s. This viscosity is a value measured at 25°C with a type E viscometer.

The electrode-forming composition of the invention can be obtained by mixing together the above-described ingredients. When optional ingredients other than the additive (heterocycle-containing compound) of the invention, positive electrode active material and binder are included, the additive and the positive electrode active material may be mixed together with the optional ingredients or the positive additive and the electrode active material may first be mixed together and the resulting mixture then mixed with the optional ingredients. The advantageous effects of the invention can be fully manifested with either approach.

The electrode of the invention includes, on at least one side of a substrate serving as the current collector, an electrode layer made of the above-described electrode-forming composition.

The method of forming an electrode layer on a substrate is exemplified by methods that apply a prepared electrode-forming composition onto a substrate to form a film and then dry the applied film. Various conventional known methods may be used without particular limitation as this method. Specific examples of coating techniques include printing processes such as offset printing and screen printing, and also blade coating, dip coating, spin coating, bar coating, slit coating, inkjet coating and die coating.

During drying of the film, either air drying or drying under applied heat may be used, although drying under applied heat is preferred from the standpoint of production efficiency. When drying under applied heat, the temperature is preferably between about 50°C and about 400°C, and more preferably between about 70°C and about 150°C.

Substrates that may be used in the electrode include metal substrates of, for example, platinum, gold, iron, stainless steel, copper, aluminum or lithium; alloy substrates obtained from any combination of these metals; oxide substrates such as indium tin oxide (ITO), indium zinc oxide (IZO) and antimony tin oxide (ATO); and carbon substrates such as glassy carbon, pyrolytic graphite and carbon felt. The substrate thickness in this invention, although not particularly limited, is preferably from 1 to 100 µm, more preferably from 3 to 30 µm, and most preferably from 5 to 25 µm.

The thickness of the electrode layer, although not particularly limited, is preferably from about 0.01 µm to about 1,000 µm, and more preferably from about 5 µm to about 300 µm. When the electrode layer is used alone as the electrode, the film thickness is preferably set to 10 µm or more.

If necessary, the electrode may be pressed. The pressing method used may be one that is commonly employed, with mold pressing and roll pressing being especially preferred. The pressure applied during pressing, although not particularly limited, is preferably 1 kN/cm or more, more preferably 2 kN/cm or more, and even more preferably 5 kN/cm or more. The applied pressure has no particular upper limit, but is preferably not more than 50 kN/cm.

The secondary battery of the invention is one that includes the above-described electrode. More specifically, it is constructed of at least a pair of positive and negative electrodes, a separator situated between these electrodes, and an electrolyte, with the above-described electrode serving as the positive electrode. Other constituent members of battery cells may be suitably selected from among conventional known members and used.

The material used in the separator is exemplified by fiberglass, cellulose, porous polyolefin, polyamide and polyester.

The electrolyte may be either a liquid or a solid, and may be either aqueous or nonaqueous. From the standpoint of being able to readily exhibit a satisfactory practical performance, preferred use can be made of an electrolyte solution composed of, for example, an electrolyte salt and a solvent.

Examples of the electrolyte salt include lithium salts such as LiPF₆, LiBF₄, LiN(SO₂F)₂, LiN(C₂F₅SO₂)₂, LiAsF₆, LiSbF₆, LiAlF₄, LiGaF₄, LiInF₄, LiClO₄, LiN(CF₃SO₂)₂, LiCF₃SO₃, LiSiF₆, LiN(CF₃SO₂) and (C₄F₉SO₂); metal iodides such as LiI, NaI, KI, CsI and CaI₂; iodide salts of quaternary imidazolinium compounds; iodide salts and perchlorate salts of tetraalkylammonium compounds; and metal bromides such as LiBr, NaBr, KBr, CsBr and CaBr₂. One of these electrolyte salts may be used alone or two or more may be used in combination.

The solvent is not particularly limited, so long as it is not one which gives rise to corrosion or decomposition of the substances making up the battery, leading to a deterioration in performance, and it dissolves the above electrolyte salt. For example, cyclic esters such as ethylene carbonate, propylene carbonate, butylene carbonate and γ-butyrolactone; ethers such as tetrahydrofuran and dimethoxyethane; acyclic esters such as methyl acetate, dimethyl carbonate, diethyl carbonate and ethyl methyl carbonate; and nitriles such as acetonitrile may be used as nonaqueous solvents. One of these solvents may be used alone or two or more may be used in combination.

Solid inorganic electrolytes such as solid sulfide electrolytes and solid oxide electrolytes, and solid organic electrolytes such as polymer electrolytes may be suitably used as solid electrolytes. By using these solid electrolytes, it is possible to obtain a completely solid battery that does not use an electrolyte solution.

Examples of the solid sulfide electrolytes include thiosilicon-based materials such as Li₂S-SiS₂-lithium compounds (wherein the lithium compound is at least one selected from the group consisting of Li₃PO₄, LiI and Li₄SiO₄), Li₂S-P₂O₅, Li₂S-B₂S₅ and Li₂S-P₂S₅-GeS₂.

Examples of the solid oxide electrolytes include Li₅La₃M₂O₁₂ (M = Nb, Ta) and Li₇La₃Zr₂O₁₂, which are oxides having a garnet structure, oxoacid salt compounds based on a γ-Li₃PO₄ structure which are generically referred to as LISICONs, perovskite-based electrolytes, Li_{3.3}PO_{3.8}N_{0.22} generically referred to as LIPONs, and sodium/alumina.

Examples of solid polymer electrolytes include polyethylene oxide-based materials, and polymer compounds obtained by polymerizing or copolymerizing monomers such as hexafluoropropylene, tetrafluoroethylene, trifluoroethylene, ethylene, propylene, acrylonitrile, vinylidene chloride, acrylic acid, methacrylic acid, methyl acrylate, ethyl acrylate, methyl methacrylate, styrene and vinylidene fluoride. A supporting salt and a plasticizer may be included in these solid polymer electrolytes.

An example of the supporting salt included in the solid polymer electrolyte is lithium (fluorosulfonyl imide). An example of the plasticizer is succinonitrile.

Batteries manufactured using the electrode-forming composition of the invention contain less fluorinated binder than ordinary secondary batteries, yet have high battery characteristics.

The configuration of the secondary battery and the type of electrolyte are not particularly limited. Any battery configuration, such as a lithium-ion battery, nickel-hydrogen battery, manganese battery or air battery, may be used, although a lithium-ion battery is preferred. The lamination method and production method are not particularly limited.

When employed in a coin cell, the above-described electrode of the invention is typically die-cut in a predetermined disk shape and used. For example, a lithium-ion secondary battery may be produced by setting one electrode on a coin cell cap to which a washer and a spacer have been welded, laying an electrolyte solution-impregnated separator of the same shape on top thereof, laying the electrode of the invention on top of the separator with the electrode layer facing down, placing a coin cell case and gasket thereon, and sealing the assembly with a coin cell crimper.

The invention also provides an additive for an electrode-forming composition containing a positive electrode active material, a binder and a solvent, which additive is made up of a heterocycle-containing compound of any of formulas (1) to (5) below. The additive may be suitably used as a gelation inhibitor for an electrode-forming composition containing a positive electrode active material, a binder and a solvent. 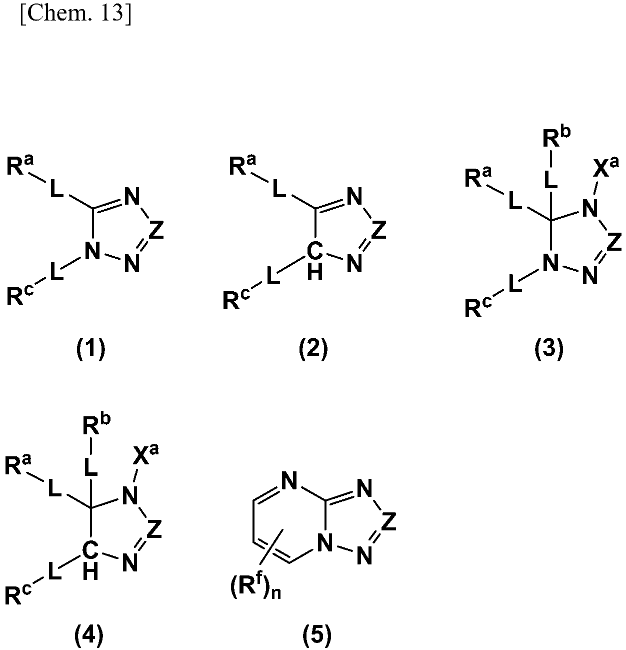 In these formulas, Z is a nitrogen atom or C-L-R^{d};
R^{a} to R^{d} are each independently a hydrogen atom, a halogen atom, a carboxyl group, a hydroxyl group, a thiol group, an amino group, an alkyl group of 1 to 6 carbon atoms which may have a substituent, an alkenyl group of 2 to 6 carbon atoms which may have a substituent, or an aryl group of 6 to 12 carbon atoms which may have a substituent;
R^{a} and R^{c} may mutually bond to form a ring of 4 to 12 carbon atoms which may have a substituent;
each L is independently a single bond, a carbonyl group, an ether bond, an ester bond or an amide bond;
each X^{a} is independently a hydrogen atom, a lithium atom, a sodium atom, an alkyl group of 1 to 6 carbon atoms which may have a substituent, an aryl group of 6 to 12 carbon atoms which may have a substituent or -CH₂NR^{e}₂;
R^{e} is an alkyl group of 1 to 10 carbon atoms, an alkanol group of 1 to 10 carbon atoms, an alkenyl group of 2 to 10 carbon atoms or an aryl group of 6 to 12 carbon atoms;
each R^{f} is independently a halogen atom, a carboxyl group, a hydroxyl group, an aldehyde group, an ester group, a ketone group, an amino group, a phenyl group, an alkoxysilyl group, an epoxy group, an acid chloride group, a thiol group, an alkyl group of 1 to 6 carbon atoms, an alkenyl group of 2 to 6 carbon atoms, or an aryl group of 6 to 12 carbon atoms; and
n is an integer from 0 to 3.

In formulas (1) to (5), specific examples of Z, R^{a} to R^{d}, L, X^{a}, R^{e} and R^{f} include the same as those mentioned in the description of the electrode-forming composition.

The positive electrode active material, binder and solvent in the electrode-forming composition also are the same as those mentioned in the above description.

This invention additionally provides an additive solution for an electrode-forming composition containing a positive electrode active material, a binder and a solvent, which additive solution includes both an additive made up of a heterocycle-containing compound of any of formulas (1) to (5) below and a solvent. By using the additive solution of the invention, the above additive is more readily mixed into the electrode-forming composition. 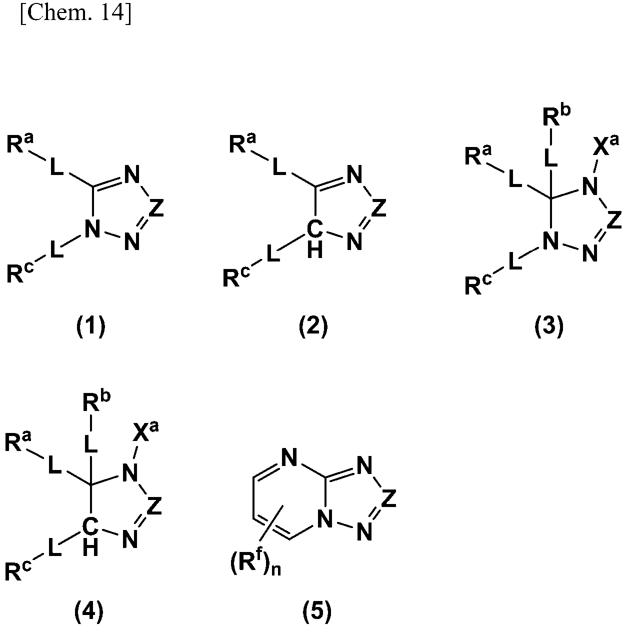 In these formulas, Z is a nitrogen atom or C-L-R^{d};
R^{a} to R^{d} are each independently a hydrogen atom, a halogen atom, a carboxyl group, a hydroxyl group, a thiol group, an amino group, an alkyl group of 1 to 6 carbon atoms which may have a substituent, an alkenyl group of 2 to 6 carbon atoms which may have a substituent, or an aryl group of 6 to 12 carbon atoms which may have a substituent;
R^{a} and R^{c} may mutually bond to form a ring of 4 to 12 carbon atoms which may have a substituent;
each L is independently a single bond, a carbonyl group, an ether bond, an ester bond or an amide bond;
each X^{a} is independently a hydrogen atom, a lithium atom, a sodium atom, an alkyl group of 1 to 6 carbon atoms which may have a substituent, an aryl group of 6 to 12 carbon atoms which may have a substituent or -CH₂NR^{e}₂;
R^{e} is an alkyl group of 1 to 10 carbon atoms, an alkanol group of 1 to 10 carbon atoms, an alkenyl group of 2 to 10 carbon atoms or an aryl group of 6 to 12 carbon atoms;
each R^{f} is independently a halogen atom, a carboxyl group, a hydroxyl group, an aldehyde group, an ester group, a ketone group, an amino group, a phenyl group, an alkoxysilyl group, an epoxy group, an acid chloride group, a thiol group, an alkyl group of 1 to 6 carbon atoms, an alkenyl group of 2 to 6 carbon atoms, or an aryl group of 6 to 12 carbon atoms; and
n is an integer from 0 to 3.

In formulas (1) to (5), specific examples of Z, R^{a} to R^{d}, L, X^{a}, R^{e} and R^{f} include the same as those mentioned in the description of the electrode-forming composition.

The additive solution is preferably one in which a heterocycle-containing compound of any of formulas (1) to (5) is dissolved or dispersed in a solvent, and more preferably one in which it is dissolved in a solvent.

Examples of solvents that may be used include the same ones as those listed as examples in the description of the electrode-forming composition. In this invention, of these, preferred use can be made of NMP, propylene carbonate, ethylene carbonate, diethyl carbonate, dimethyl carbonate and ethyl methyl carbonate.

The positive electrode active material and binder in the electrode-forming composition also are the same as those mentioned in the above description.

The solids concentration of the additive solution of the invention is set as appropriate while taking into account, for example, the saturation solubility in the solvent and the shelf stability, but is generally from about 1 to about 60 wt%, preferably from about 3 to about 55 wt%, and even more preferably from about 3 to about 50 wt%.

### EXAMPLES

Examples and Comparative Examples are given below to more fully illustrate the invention, although the invention is not limited by these Examples. The apparatuses used were as follows.

| | |
|---|---|
| (1) Planetary centrifugal mixer: | ARE-310 non-vacuum Thinky Mixer, from Thinky Corporation |
| (2) Dry booth: | Nihon Spindle Manufacturing Co., Ltd. |
| (3) E-type viscometer: | TV-22 viscometer, from Toki Sangyo. The viscosity 5 minutes after starting measurement under the following conditions was used: measurement temperature, 25°C; rotor, 1°34' × R24. |

The starting materials and other reagents used were as follows.

### <Active Materials>

| | |
|---|---|
| NCA: | Lithium nickelate (LiNi_{0.88}Co_{0.11}Al_{0.01}O₂, NCA-034H; Ni content, 55 wt%), from Ecopro |

### <Fluorocarbon Binder>

| | |
|---|---|
| Solef-5130: | Polyvinylidene fluoride (PVdF), from Solvay |

### <Conductive Additive>

| | |
|---|---|
| AB: | Denka Black (registered trademark) Li100 (high-purity acetylene black), from Denka Co., Ltd. |

### <Solvent>

| | |
|---|---|
| NMP: | from Nippon Refine Co., Ltd. |

### <Additive A>

### [Additives Used in the Examples]

| | |
|---|---|
| A1: | 2-Mercaptobenzimidazole, from Tokyo Chemical Industry Co., Ltd. |
| A2: | 5-Mercapto-1-methyltetrazole, from Tokyo Chemical Industry Co., Ltd. |
| A3: | 7-Hydroxy-5-methyl-[1,2,4]triazolo[1,5-a]pyrimidine, from Tokyo Chemical Industry Co., Ltd. |

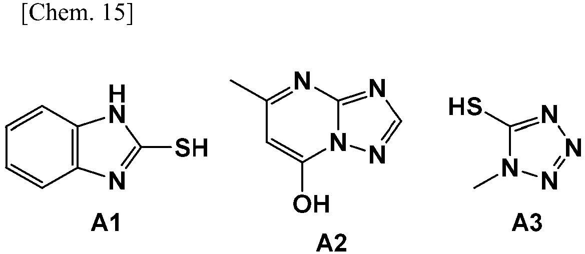

### [Additives Used in Comparative Examples]

| | |
|---|---|
| a1: | Oxalic acid, from Fujifilm Wako Pure Chemical Corporation |
| a2: | Piperonylic acid, from Tokyo Chemical Industry Co., Ltd. |
| a3: | 8-Quinolinol, from Tokyo Chemical Industry Co., Ltd. |
| a4: | Anthranil, from Tokyo Chemical Industry Co., Ltd. |
| a5: | Phthalazone, from Tokyo Chemical Industry Co., Ltd. |
| a6: | Pyridine, from Fujifilm Wako Pure Chemical Corporation |

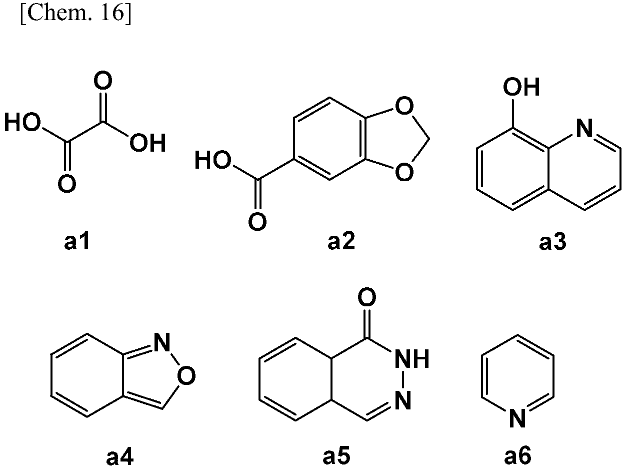

### • Preparation of Positive Electrode Compositions (Electrode Slurries)

### [Examples 1-1 to 1-3, Comparative Examples 1-1 to 1-7]

NMP solutions (5 wt%) of each additive were prepared. A 7 wt% NMP solution of PVdF was prepared. Within a dry booth, the positive electrode active material, binder solution, conductive additive, additive solution, NMP and water were mixed together such as to arrive at the compositional ratios shown in Table 1; mixture was carried out using a planetary centrifugal mixer, thereby giving electrode slurries. The total amount of slurry prepared was 20 g in each case and the slurry was adjusted so as to set the solids content to 80 wt% and the solvent composition of the slurry to NMP/H₂O = 97/3 (weight ratio). The water was added in order to deliberately create a high moisture state within the slurry.

Viscosity measurements of the slurries obtained as described above were carried out with an E-type viscometer immediately after slurry preparation. In addition, the slurries were visually checked for the presence or absence of gelation after 24 hours of storage at 40°C. For slurries that did not gel, the presence/absence of a thickening and gelling tendency was checked by similarly carrying out viscosity measurements using an E-type viscometer, and the slurries were rated based on the following criteria. These evaluations are presented collectively in Table 1.

### <<Rating Criteria>>

| | |
|---|---|
| A: | No gelation |
| B: | Composition gelled, making use in electrode formation impossible |

**[Table 1]**

| | Solid ingredients (wt%) | | | | Viscosity (mPa·s) | | Evaluation |
|---|---|---|---|---|---|---|---|
| | Positive electrode active material | Fluorocarbon binder | Conductive additive | Additive | Same day | After storage | |
| Example 1-1 | NCA-034H (97.40) | Solef-5130 (1.00) | AB (1.50) | A1 (0.10) | 347,300 | 198,000 | A |
| Example 1-2 | NCA-034H (97.40) | Solef-5130 (1.00) | AB (1.50) | A2 (0.10) | 319,900 | 219,200 | A |
| Example 1-3 | NCA-034H (97.40) | Solef-5130 (1.00) | AB (1.50) | A3 (0.10) | 347,000 | 260,400 | A |
| Comparative Example 1-1 | NCA-034H (97.40) | Solef-5130 (1.00) | AB (1.50) | al (0.10) | 361,200 | gelated | B |
| Comparative Example 1-2 | NCA-034H (97.40) | Solef-5130 (1.00) | AB (1.50) | a2 (0.10) | 369,100 | gelated | B |
| Comparative Example 1-3 | NCA-034H (97.40) | Solef-5130 (1.00) | AB (1.50) | a3 (0.10) | 318,200 | gelated | B |
| Comparative Example 1-4 | NCA-034H (97.40) | Solef-5130 (1.00) | AB (1.50) | a4 (0.10) | 226,600 | gelated | B |
| Comparative Example 1-5 | NCA-034H (97.40) | Solef-5130 (1.00) | AB (1.50) | a5 (0.10) | 172,100 | gelated | B |
| Comparative Example 1-6 | NCA-034H (97.40) | Solef-5130 (1.00) | AB (1.50) | a6 (0.10) | 187,400 | gelated | B |
| Comparative Example 1-7 | NCA-034H (97.50) | Solef-5130 (1.00) | AB (1.50) | - | 44,970 | gelated | B |

The results in Table 1 demonstrate that, in the electrode-forming compositions of the invention to which a specific heterocycle-containing compound was added, thickening and gelation are suppressed and the shelf stability is enhanced.

## Claims

1. An electrode-forming composition comprising a heterocycle-containing compound, a positive electrode active material, a binder and a solvent, wherein the heterocycle-containing compound has a heterocycle that is a five-membered ring having two or more nitrogen atoms and also has at least one group selected from the group consisting of hydroxyl and thiol groups.

2. The electrode-forming composition of claim 1, wherein the heterocycle-containing compound is a compound of any of formulas (1) to (5) below 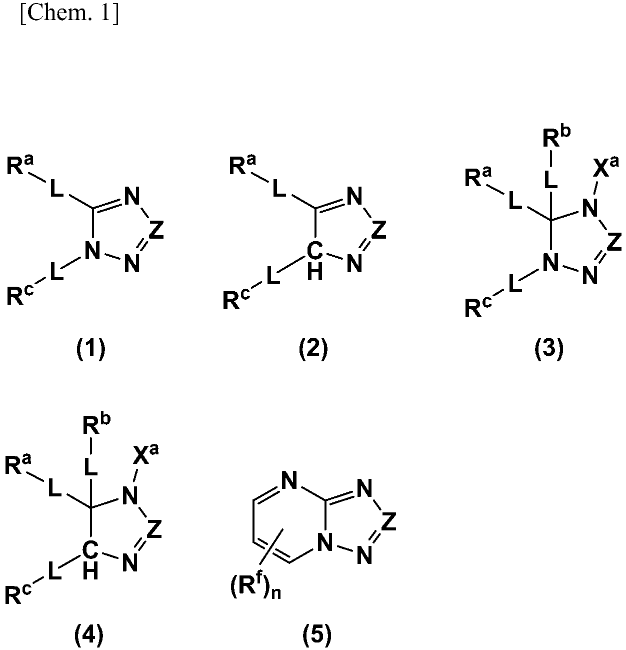 (wherein Z is nitrogen or C-L-R^{d};
R^{a} to R^{d} are each independently a hydrogen atom, a halogen atom, a carboxyl group, a hydroxyl group, a thiol group, an amino group, an alkyl group of 1 to 6 carbon atoms which may have a substituent, an alkenyl group of 2 to 6 carbon atoms which may have a substituent, or an aryl group of 6 to 12 carbon atoms which may have a substituent;
R^{a} and R^{c} may mutually bond to form a ring of 4 to 12 carbon atoms which may have a substituent;
each L is independently a single bond, a carbonyl group, an ether bond, an ester bond or an amide bond;
each X^{a} is independently a hydrogen atom, a lithium atom, a sodium atom, an alkyl group of 1 to 6 carbon atoms which may have a substituent, an aryl group of 6 to 12 carbon atoms which may have a substituent or -CH₂NR^{e}₂;
R^{e} is an alkyl group of 1 to 10 carbon atoms, an alkanol group of 1 to 10 carbon atoms, an alkenyl group of 2 to 10 carbon atoms or an aryl group of 6 to 12 carbon atoms;
each R^{f} is independently a halogen atom, a carboxyl group, a hydroxyl group, an aldehyde group, an ester group, a ketone group, an amino group, a phenyl group, an alkoxysilyl group, an epoxy group, an acid chloride group, a thiol group, an alkyl group of 1 to 6 carbon atoms, an alkenyl group of 2 to 6 carbon atoms, or an aryl group of 6 to 12 carbon atoms; and
n is an integer from 0 to 3).

3. The electrode-forming composition of claim 2, wherein the substituent on R^{a} to R^{d} and X^{a} is at least one selected from the group consisting of carboxyl, hydroxyl, aldehyde, ester, ketone, amino and phenyl groups, halogen atoms, and alkoxysilyl, epoxy, acid chloride and thiol groups.

4. The electrode-forming composition of claim 2, wherein at least one of R^{a} to R^{d} is a hydroxyl group or a thiol group.

5. The electrode-forming composition of claim 2, wherein each X^{a} is independently a hydrogen atom, a lithium atom or a sodium atom.

6. The electrode-forming composition of claim 1, further comprising a conductive additive.

7. The electrode-forming composition of claim 1, wherein the positive electrode active material includes at least 30 wt% of S, Fe or Ni.

8. The electrode-forming composition of claim 1, further comprising a dispersant, which dispersant is a polymer having a pyrrolidone structure or containing nitrile groups.

9. The electrode-forming composition of claim 8, wherein the dispersant is of at least one type selected from the group consisting of polyvinylpyrrolidone and polyacrylonitrile.

10. The electrode-forming composition of any one of claims 1 to 9, wherein the heterocycle-containing compound is included in an amount of from 0.001 to 0.5 wt% of the solids.

11. An additive for an electrode-forming composition that includes a positive electrode active material, a binder and a solvent, wherein the additive comprises a heterocycle-containing compound of any of formulas (1) to (5) below 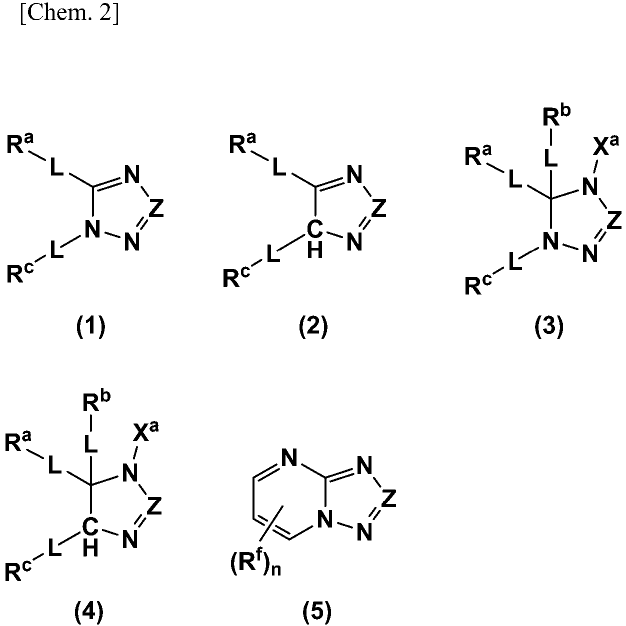 (wherein Z is nitrogen or C-L-R^{d},
R^{a} to R^{d} are each independently a hydrogen atom, a halogen atom, a carboxyl group, a hydroxyl group, a thiol group, an amino group, an alkyl group of 1 to 6 carbon atoms which may have a substituent, an alkenyl group of 2 to 6 carbon atoms which may have a substituent, or an aryl group of 6 to 12 carbon atoms which may have a substituent;
R^{a} and R^{c} may mutually bond to form a ring of 4 to 12 carbon atoms which may have a substituent;
each L is independently a single bond, a carbonyl group, an ether bond, an ester bond or an amide bond;
each X^{a} is independently a hydrogen atom, a lithium atom, a sodium atom, an alkyl group of 1 to 6 carbon atoms which may have a substituent, an aryl group of 6 to 12 carbon atoms which may have a substituent or -CH₂NR^{e}₂;
R^{e} is an alkyl group of 1 to 10 carbon atoms, an alkanol group of 1 to 10 carbon atoms, an alkenyl group of 2 to 10 carbon atoms or an aryl group of 6 to 12 carbon atoms;
each R^{f} is independently a halogen atom, a carboxyl group, a hydroxyl group, an aldehyde group, an ester group, a ketone group, an amino group, a phenyl group, an alkoxysilyl group, an epoxy group, an acid chloride group, a thiol group, an alkyl group of 1 to 6 carbon atoms, an alkenyl group of 2 to 6 carbon atoms, or an aryl group of 6 to 12 carbon atoms; and
n is an integer from 0 to 3).

12. The additive of claim 11 which is a gelation inhibitor.

13. An additive solution for an electrode-forming composition that includes a positive electrode active material, a binder and a solvent, which additive solution comprises an additive comprised of a heterocycle-containing compound of any of formulas (1) to (5) below and a solvent 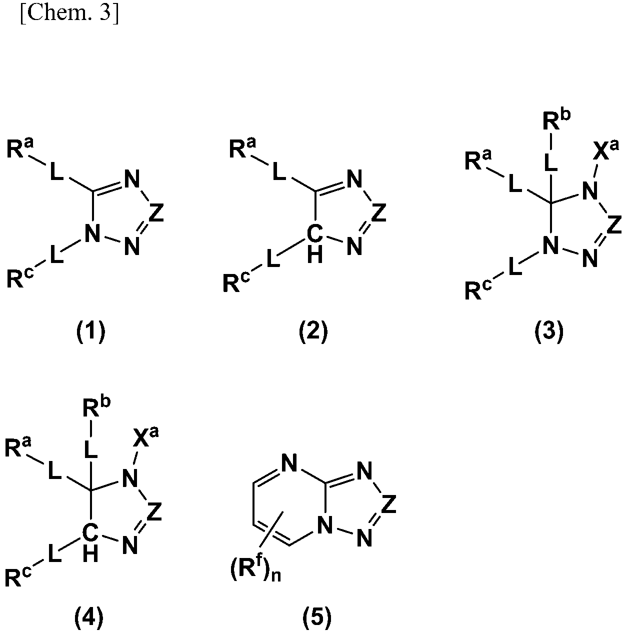 (wherein Z is nitrogen or C-L-R^{d};
R^{a} to R^{d} are each independently a hydrogen atom, a halogen atom, a carboxyl group, a hydroxyl group, a thiol group, an amino group, an alkyl group of 1 to 6 carbon atoms which may have a substituent, an alkenyl group of 2 to 6 carbon atoms which may have a substituent, or an aryl group of 6 to 12 carbon atoms which may have a substituent;
R^{a} and R^{c} may mutually bond to form a ring of 4 to 12 carbon atoms which may have a substituent;
each L is independently a single bond, a carbonyl group, an ether bond, an ester bond or an amide bond;
each X^{a} is independently a hydrogen atom, a lithium atom, a sodium atom, an alkyl group of 1 to 6 carbon atoms which may have a substituent, an aryl group of 6 to 12 carbon atoms which may have a substituent or -CH₂NR^{e}₂;
R^{e} is an alkyl group of 1 to 10 carbon atoms, an alkanol group of 1 to 10 carbon atoms, an alkenyl group of 2 to 10 carbon atoms or an aryl group of 6 to 12 carbon atoms;
each R^{f} is independently a halogen atom, a carboxyl group, a hydroxyl group, an aldehyde group, an ester group, a ketone group, an amino group, a phenyl group, an alkoxysilyl group, an epoxy group, an acid chloride group, a thiol group, an alkyl group of 1 to 6 carbon atoms, an alkenyl group of 2 to 6 carbon atoms, or an aryl group of 6 to 12 carbon atoms; and
n is an integer from 0 to 3).
